# EUROPEAN PATENT SPECIFICATION

(11) **EP 3 838 081 B1**
(45) Date of publication and mention of the grant of the patent: **29.06.2022**
(21) Application number: 20213876.4
(22) Date of filing: 14.12.2020
(51) Int. Cl.: A47J 31/44, A47J 42/40

(54) **MACHINE AND METHOD FOR FILLING A FILTER WITH A DOSE OF COFFEE POWDER**
MASCHINE UND VERFAHREN ZUM FÜLLEN EINES FILTERS MIT EINER DOSIS VON KAFFEEPULVER
MACHINE ET PROCÉDÉ DE REMPLISSAGE D'UN FILTRE AVEC UNE DOSE DE POUDRE DE CAFÉ

(30) Priority: 19.12.2019 IT 201900024697
(43) Date of publication of application: 23.06.2021
(73) Proprietor: GRINDITALY S.R.L., 20877 Roncello, ( Monza Brianza ) (IT)
(72) Inventor: CARZANIGA, Pietro, 20877 Roncello (Monza Brianza) (IT)
(74) Representative: Inchingalo, Simona

(56) References cited:
- EP-A1- 3 329 812
- WO-A1-2019/058267
- FR-A1- 2 612 758
- IT-A1- UA20 163 920

## Description

This invention relates to a machine and a method for filling a filter with a dose of coffee powder.

The invention finds particular application in the catering sector, in particular for use in cafes, bars, and restaurants and in all those applications in which a coffee drink is prepared.

The preparation of the coffee drink, better known as "espresso" or simply "coffee", is typically done manually by a user who fills a filter, arranges it in a filter-holder arm, with a dose of ground coffee powder, and presses the dose with a press, or a tool with an abutment surface that is pressed against the dose placed in the filter to compact the dose.

In fact, the pressing step makes it possible to create a compacted layer of coffee powder that can be properly brewed.

The filter-holder arm is then hooked to dispensing mouth for a pressurised hot water of an espresso coffee machine so that through the outlet holes of the filter holder, the very popular "bar" espresso coffee is dispensed.

The Applicant noted how the coffee preparation process requires a lengthy manual process that often entails long wait times, and how the quality of the coffee ordered often disappoints the customer's expectations.

In particular, the Applicant observed that the most critical preparation steps are the steps of filling the filter and pressing the dose of coffee powder into the filter.

In fact, depending on the type of coffee and the type of grind, to obtain a quality espresso, it would be necessary:
- to provide for a certain amount by weight of dose of coffee powder,
- to press with an appropriate intensity, and
- to make sure that the dose is evenly pressed.

In fact, if the dose of coffee is pressed too hard (because there is too much of it or because it has been pressed too much), the resulting coffee will be too concentrated and dark or will struggle to come out of the holes of the filter holder, perhaps burning the seals of the machine. If it is not pressed enough (because there is little of it or because it has not been pressed enough), the coffee will be too watery and clear.

In addition, if the dose is not evenly pressed inside the filter, it is possible that the top surface of the dose will have surface ridges and/or indentations and that there will be areas of varying density within the dose itself. Thus, the water passing through the dose will tend to follow the shorter and less dense path, thus creating an incorrect brew.

It is, therefore, important that the dose of coffee is properly prepared, and, therefore, that the filter is filled and pressed correctly each time.

The Applicant also noted that most baristas are not specialised in preparing coffee, so that the filling and pressing operations are not always carried out correctly and with the care necessary to ensure that the resulting coffee is high quality.

It has also been noted that the filling and pressing operations require considerable physical effort if compared to the number of coffees a barman prepares during the day, so it is plausible to expect that, although he may be a professional, it is unlikely that the operations will always be performed correctly in a way that can be repeated.

Tiredness, imprecision, haste and distraction can, therefore, negatively affect coffee preparation operations, resulting in an end product of poor quality.

It has also been noted that coffee preparation stations are often dirty because of the coffee powder that is continuously lost (and wasted) while the drink is being prepared.

Document IT-A-UA20163920 discloses a machine according to the preamble of independent claim 1.

In this context, the technical task underlying this invention is to propose a machine and a method for filling a filter with a dose of coffee powder that overcome one or more of the above-mentioned drawbacks of the prior art. In particular, one purpose of this invention is to provide a machine for filling a filter with a dose of coffee powder, which enables the automated, rapid, precise, and repeatable filling of the filter.

Another purpose of this invention is to propose a method for filling a filter with a dose of coffee powder that is reliable, efficient, and that enables the productivity of the coffee preparation process to be improved.

An additional purpose of this method is to improve the quality of the final product.

The specified technical task and purposes are basically achieved by means of a machine and a method for filling a filter with a dose of coffee powder comprising the technical features set forth in one or more of the accompanying claims.

In particular, this invention provides a machine for filling a filter with a dose of coffee powder comprising a support base comprising a support seat adapted to receive and support a filter for containing a dose of coffee powder.

The machine comprises a dispensing mouth for dispensing the dose of coffee powder facing the support seat and aligned with the support seat along an alignment axis.

The machine comprises a pressing device comprising a pressing portion having a pressing surface.

The machine advantageously comprises a first movement member configured to reversibly move the pressing device between a non-operating position and an operating position, wherein the pressing device is interposed between the dispensing mouth and the support seat so that the pressing portion is aligned with the support seat along the alignment axis and the pressing surface faces the support seat and is perpendicular to the alignment axis.

The machine advantageously comprises a rotation member configured to rotate the pressing portion about a rotation axis that is parallel to the alignment axis and coincident, in use, with the alignment axis.

The machine advantageously comprises a second movement member configured to move the support seat and the dispensing mouth towards and away from each other along the alignment axis.

The machine advantageously comprises a cleaning station comprising a cleaning device configured to clean the pressing surface when the pressing device is arranged in the non-operating position.

Thanks to this machine, therefore, the pressing portion is configured to perform a controlled pressing of the dose of coffee powder contained in the filter, during a machine usage configuration wherein the filter is arranged inside the support seat, the pressing portion is arranged in the operating position, and the pressing portion and the support seat are moved towards each other.

Thanks to this invention, in fact, it is possible to perform all the operations necessary for efficient filling of a filter for coffee preparation in a single machine quickly and efficiently.

Advantageously, and thanks to the presence of movement and rotation members, it is possible to exert a uniform pressure on the dose of coffee powder contained in the filter through the reciprocal movement between the pressing portion and the support seat and to give the dose of coffee powder a homogeneous surface, without ridges and lumps, thanks to the rotation of the pressing portion, which evenly spreads the coffee powder. In this way, it is possible to efficiently prepare a high-quality coffee drink. In fact, the pressurised hot water will pass through the filter evenly infusing every particle of coffee powder in the dose.

Through the movement of appropriate, programmable mechanical members, the machine is, therefore, able to carry out precise operations in a very short time in a way that can be repeated with high reliability to improve the quality of the coffee prepared.

The machine is able to carry out - fully automatically - a complete filling cycle in just a few seconds, providing the user with a perfectly filled filter ready to be hooked to the coffee machine.

Advantageously, the support seat therefore enables the filter to be supported without the help of the operator, who therefore does not have to hold the filter in position as is often the case during the filling operation, being able to dedicate himself to something else and limiting his interaction with the machine.

In particular, the hooking seat enables the filter to be kept aligned with the alignment axis during the entire filling cycle, so that the operator does not have to hold the filter until the end of the cycle.

Thanks to the presence of the cleaning station, it is possible to keep the pressing surface of the pressing portion clean at each filter-filling cycle, i.e. at each drink-dispensing cycle, in order to prevent the accumulation of coffee powder residues (left over from the previous pressing) from interfering with the correct levelling and pressing of the new dose. In this way, the durability of the pressing device and the pressing efficiency of the dose can be improved.

According to an additional aspect of this invention, a method for filling a filter with a dose of coffee powder is also provided, comprising the steps of:
- arranging a machine in accordance with this invention;
- arranging a filter inside the support seat, wherein the filter comprises a side wall extending about an extension axis and a perforated bottom wall defining a housing adapted to contain a dose of coffee powder, so that the alignment axis is coincident with the extension axis of the filter;
- dispensing the dose of coffee powder from the dispensing mouth inside the housing;
- controlling the first movement member to move the pressing device from the non-operating position to the operating position;
- controlling the rotation member to rotate the pressing portion around the rotation axis, so that the rotation axis is coincident with the alignment axis;
- controlling the second movement member to move the support seat and the pressing device towards each other along the alignment axis so that the pressing portion is inserted by rotation inside the housing of the filter until the pressing surface is arranged at a pressing distance from the perforated bottom wall so that a controlled pressing of the dose of coffee powder contained in the filter is performed;
- controlling the second movement member to move the support seat and the pressing device away from each other along the alignment axis so that the pressing portion is removed from the housing;
- controlling the first movement member to move the pressing device from the operating position to the non-operating position;
- activating the cleaning of the pressing surface, following the previous control step.

Advantageously, the method just described defines a repeatable and immediate cycle for filling a filter with a dose of coffee powder that can be repeated after a few seconds by arranging a new filter to be filled, thus improving production efficiency.

Thanks to this method, it is not necessary for the user to be particularly well trained in coffee preparation; in fact, the method makes it possible to automatically fill and press the filter to quickly obtain a perfect dose to be used in a classic coffee machine. The user simply places the filter in the support seat and starts the machine, with no need to hold the filter in place by hand during filling and no need to clean the pressing surface each time. The automatic machine will carry out all those operations, in an effective and controlled way, that, until now, were carried out manually by the operator, reducing the operator's tiredness and increasing the quality of the coffee.

The operator will, therefore, no longer need a dispenser, a presser, and a dedicated work surface where he can manually carry out the preparation operations, but simply the space necessary to house the machine that is the subject of this invention, operating in a clean environment wherein the margin of error is minimised.

At the end of the filling cycle, the operator simply needs to remove the filter with the dose of coffee powder.

The dependent claims, included herein for reference, correspond to different embodiments of the invention.

Further characteristics and advantages of this invention will become more apparent from the indicative, non-limiting description of a preferred and non-exclusive embodiment of a machine for filling a filter with a dose of coffee powder, as illustrated in the accompanying drawings wherein:
- Figure 1 is a schematic perspective view of a machine for filling a filter with a dose of coffee powder according to this invention;
- Figures 2-6 are schematic perspective views of the machine in Figure 1, in which some parts have been removed to better illustrate others, illustrating steps in the method for filling a filter with a dose of coffee powder that is the subject of this invention,
- Figures 4A and 5A are schematic cross-sections of a detail in Figures 4 and 5, and
- Figures 7 and 8 are schematic perspective views, in respective, distinct operating positions, of one alternative embodiment of the machine that is the subject of this invention.

With reference to the attached figures, the reference number 1 indicates, as a whole, a machine for filling a filter 100 with a dose of coffee powder C, henceforth simply the machine 1.

The machine 1 comprises a support base 2 comprising a support seat 2a adapted to receive and support a filter 100 for containing a dose of coffee powder C.

This invention will refer to coffee powder C; however, the use of other powdered food products or preparations for brewing, such as tea, roasted barley, and ginseng also fit within the same inventive concept as this invention.

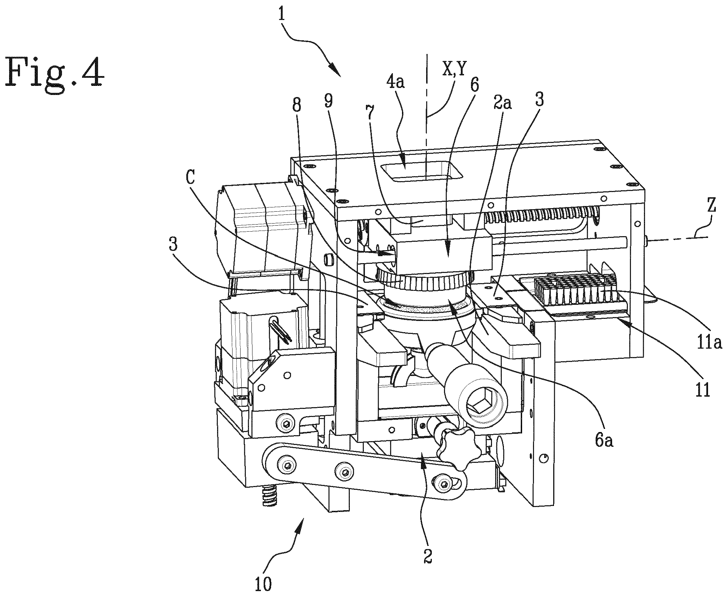

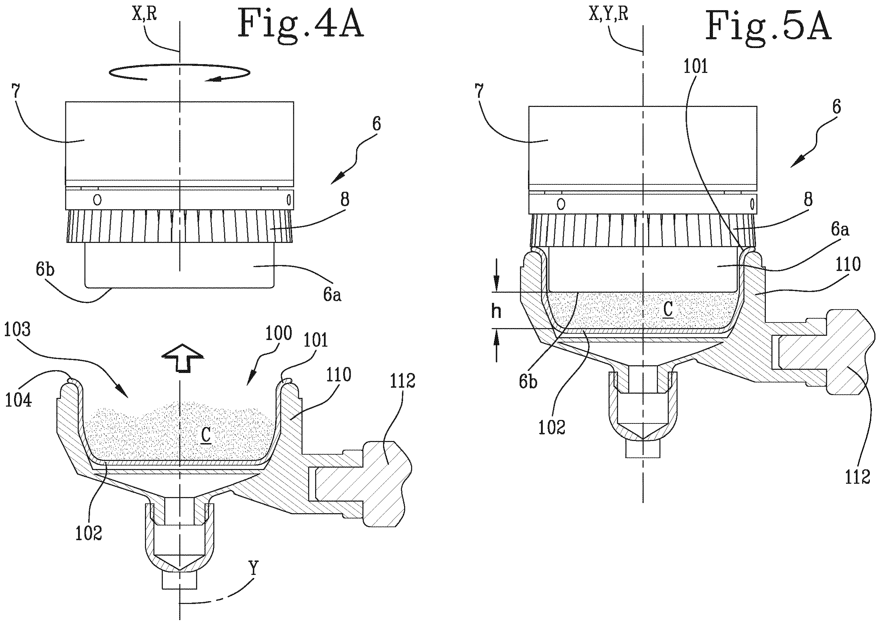

With reference to Figure 4A, the filter 100 comprises a side wall 101 extending around an extension axis Y and a perforated bottom wall 102 defining a housing 103 suitable for holding a dose of coffee powder C.

In particular, the perforated bottom wall 102 of the filter 100 comprises a plurality of perforations of a known type, not illustrated, of a size to prevent coffee powder C from passing through the perforated bottom wall 102 but allowing water to pass through.

The top edge 104 of the side wall 101 preferably has a circular crosssection.

The filter 100 is preferably housed within a filter holder 110, of a known type, that is equipped with channels 111 for dispensing coffee and a support arm 112 that can be grasped by the operator; alternatively, the filter 100 and the filter holder 110 may consist of a single piece.

The support seat 2 preferably comprises retaining means 3 configured to retain the filter holder 110 in position within which the filter 100 is arranged; alternatively, according to a possible embodiment not illustrated in the attached figures, the retaining means 3 could be configured so as to directly retain the filter 100 without the need to also position the filter holder 110 in the support seat 2a.

The support seat 2a advantageously allows the filter 100 to remain independently supported after being housed, for example without the need for the operator to keep grasping the support arm 112.

The machine 1 comprises a dispensing mouth 4a for dispensing the dose of coffee powder C facing the support seat 2a and aligned with the support seat 2a along an alignment axis X.

The machine 1 preferably comprises a hopper 4 having a containment volume suitable for containing the coffee powder C. The hopper 4 is or can be connected to the dispensing mouth 4a at a bottom of the hopper 4.

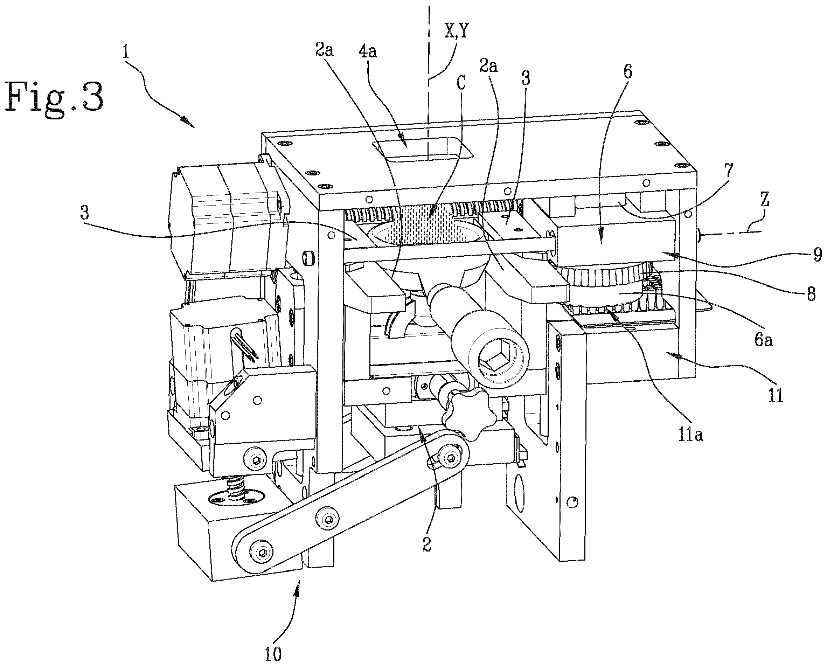

In particular, the dispensing mouth 4a is facing and aligned with the support seat 2a along an alignment axis X, preferably vertical, and can be selectively opened to enable the discharge of the dose of coffee powder C into the filter 100 during a usage configuration of the machine 1 (Fig. 3) wherein the filter is arranged in the support seat 2a so that the extension axis Y coincides with the alignment axis X.

In particular, the hooking seat 2a enables the filter to be kept aligned with the alignment axis X during the entire filling cycle, so that the operator does not have to hold the filter holder 110 until the end of the cycle, as will be clearer from the following description.

In addition, the machine 1 may preferably comprise a selection device 5, for selecting the dose of coffee powder C to be dispensed (for example, single or double), which is connected to the hopper 4 to control the selective opening and closing of the dispensing mouth 4a.

In particular, in the illustrated embodiment, the selection device 5 comprises selection buttons; however, it may comprise an inductive sensor that reads and recognises certain parameters of the filter 100 (for example, the depth or shape of the channels 111 of the filter holder 110) to process the amount of coffee powder C to be dispensed as a dose into the housing 103, or a proximity switch.

The machine 1 comprises a pressing device 6 comprising a pressing portion 6a having a pressing surface 6b.

The pressing surface 6b preferably has an extension such that it can fit well in the housing 103, i.e. it has a surface having an extension slightly smaller than the cross-sectional area of the side wall 101 of the filter 100. Even more preferably, the pressing surface 6b has a diameter that is slightly smaller than the inner diameter of the filter 100.

The machine comprises a rotation member 7 configured to rotate the pressing portion 6a about a rotation axis R that is parallel to the alignment axis X and coincident, in use, with the alignment axis X.

The machine 1 preferably comprises a peripheral brush 8 arranged outside the pressing portion 6a, preferably attached to the pressing portion 6a.

The peripheral brush 8, as will become clear in the following, advantageously enables the upper edge 104 of the side wall 101 to be cleaned. In particular, when attached to the pressing portion 6a, it may rotate together with the pressing portion 6a.

The peripheral brush 8 is preferably a circular brush that is mounted coaxially.

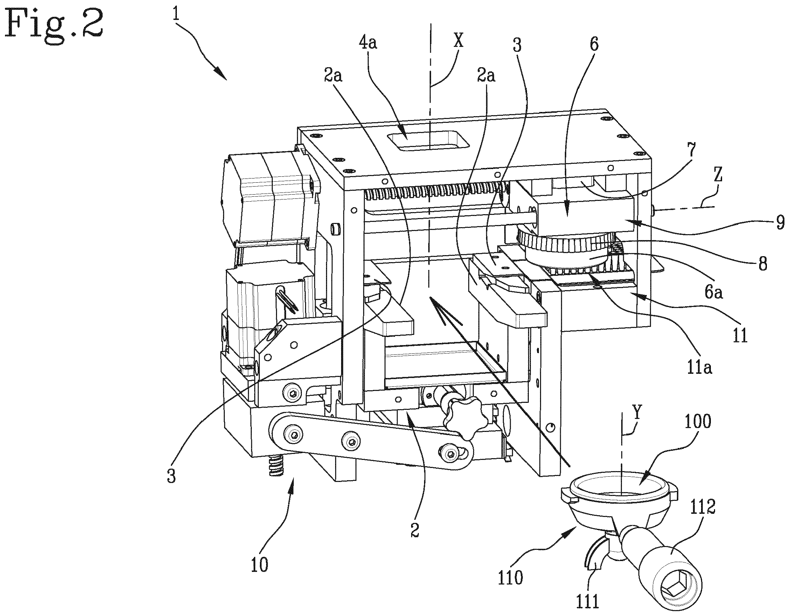

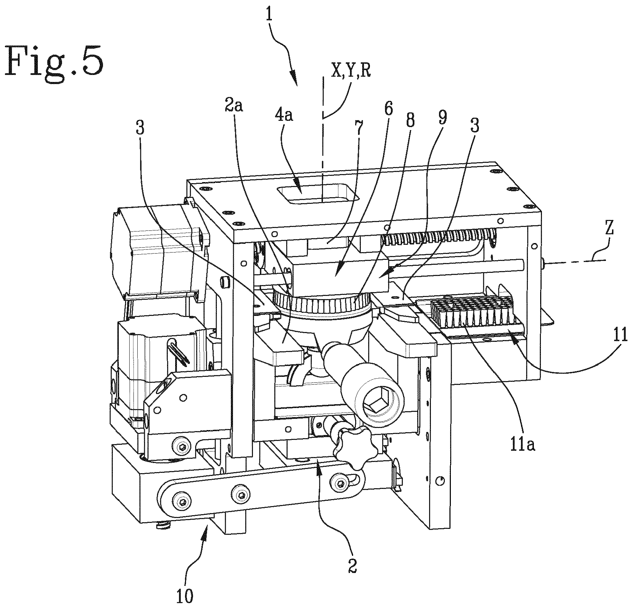

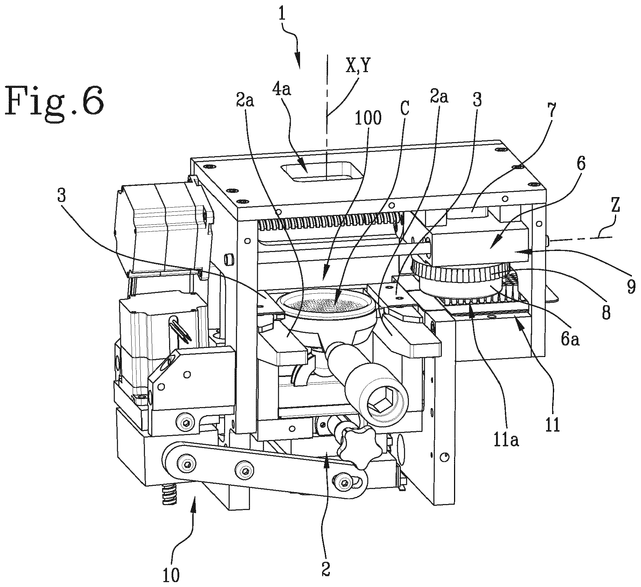

The machine 1 comprises a first movement member 9 configured to reversibly move the pressing device 6 between a non-operating position (Fig. 2, 6) and an operating position (Fig. 4, 5), wherein the pressing device 6 is interposed between the dispensing mouth 4a and the support seat 2a such that the pressing portion 6a is aligned with the support seat 2a along the alignment axis X and the pressing surface 6b faces the support seat 2a and is perpendicular to the alignment axis X.

The pressing device 6 can preferably be moved along a horizontal movement direction Z, preferably perpendicular to the alignment axis X. The machine 1 comprises a second movement member 10 configured to move the support seat 2a and the dispensing mouth 4a towards and away from each other along the alignment axis X.

Advantageously, the pressing portion 6a is configured to perform a controlled pressing of the dose of coffee powder C contained in the filter 100, during a machine 1 usage configuration wherein the filter 100 is arranged inside the support seat 2a, the pressing portion 6a is arranged in the operating position, and the pressing portion 6a and the support seat 2a are moved towards each other.

Advantageously, the perpendicular pressing and the rotation of the pressing portion 6a enable the efficient compacting of the dose of coffee powder C.

The machine 1 preferably comprises a control and adjustment unit, not illustrated, configured to control the activation of the first movement member 9, to control activation of the second movement member 10, and to control activation of the rotation member 7, and to adjust operating parameters for operating the first movement member 9, the second movement member 10 and the rotation member 7, depending on distinctive parameters of the dispensed dose of coffee powder C.

In particular, the operating parameters may be selected from at least one of the following: rotation speed of the pressing portion 6a, rotation period of the pressing portion 6a, pressing intensity, and pressing distance h (i.e., the distance between the perforated bottom wall 102 of the filter 100 and the pressing surface 6b of the pressing device 6).

In particular, the distinctive parameters of the dose of coffee powder C may be selected from at least one of the following: type of coffee, type of grind, weight and/or volume of the coffee powder C, and amount of moisture contained in the coffee powder C.

Advantageously, therefore, the control and adjustment unit makes it possible to set the machine so that pressing is carried out in the best possible way to obtain high quality coffee.

For example, the machine 1 may comprise a dynamometric adjustment assembly for the pressing force that uses a compression spring with feedback of the applied force by means of a load cell, not illustrated. Alternatively, the load cell can be configured to directly detect the value of the instantaneous pressing force and interrupt the pressing action when a pre-set threshold parameter is reached.

By pre-setting, or detecting in real time (by means of suitable detection means of a known type), the operating parameters, the operator only has to arrange the filter 100 in the support seat 2a and start the machine 1 (for example by means of the selection device 5). After a few seconds, the filter 100 will be filled with an optimally pressed dose and can be removed from the support seat 2a for use in coffee preparation, and the machine 1 will already be ready for a subsequent filter 100.

In addition, the machine 1 advantageously comprises a cleaning station 11 comprising a cleaning device 11a configured to clean the pressing surface 6b when the pressing device 6 is arranged in the non-operating position. The cleaning device 11a is also, preferably, configured to clean the peripheral brush 8 when the pressing device 6 is arranged in the non-operating position.

Even more preferably, with reference to the embodiment illustrated in the appended figures, the cleaning device 11a is a brush and the cleaning can be carried out by rotating the pressing portion 6a about the rotation axis R against the brush.

The brush is preferably arranged on a removable support to allow periodic cleaning of the brush.

Thanks to the presence of the cleaning station 11, it is therefore possible to clean the pressing surface 6b at each filling cycle of the filter 100. Failure to clean the pressing device 6 after each use would in fact result in coffee powder C being deposited on its pressing surface 6b, leading to an uneven and non-flat pressing of the dose.

Advantageously, the machine 1 may also comprise a coffee-bean grinder that can be connected to the hopper 4, not illustrated, or an instantaneous grinder/measurer connected directly to the dispensing mouth 4a, not illustrated, so as to obtain an automatic "all-in-one" machine 1: grinder, measurer, presser, equipped with an automatic cleaning system.

For example, a grinder/measurer of a known type can be provided with a hopper for accumulating and dosing the coffee by means of a movable bulkhead driven by a motor which makes the selected dose of coffee drop. In addition, the grinder or grinder/measurer may preferably be included in the outer casing of the machine 1, so that it is, in practice, "integrated" into the machine 1.

According to an additional aspect of this invention, a method for filling a filter 100 with a dose of coffee powder C is also provided. The method comprises the steps of arranging a machine 1 according to this invention and arranging a filter 100 within the support seat 2a, so that the alignment axis X is coincident with the extension axis Y.

The operation of positioning the filter 100 within the support seat 2a (Fig. 2) advantageously represents the only manual action required of the operator.

Following this, the method comprises a step of dispensing the dose of coffee powder C from the dispensing mouth 4a into the housing 103 of the filter 100 (Fig. 3).

The method also, preferably, comprises a step of controlling the second movement member 10 to move the support seat 2a towards the dispensing mouth 4a along the alignment axis X before the step of dispensing the dose of coffee powder C, and a step of controlling the second movement member 10 to move the support seat 2a away from the dispensing mouth 4a along the alignment axis X at the end of the above-mentioned step of dispensing the dose of coffee powder C.

In other words, it is the filter 100 that is moved from the bottom upwards to be arranged in contact with the pressing surface 6b and it is always the filter 100 that is moved from the top downwards to move away from the pressing surface 6b and enable the extraction of the filled filter 100 from the machine 1.

Advantageously, the support seat 2a and the dispensing mouth 4a are initially arranged, i.e., prior to the dispensing step, at such a distance that the filter 100 can be easily inserted into the support seat 2a (Fig. 2). Therefore, in order to prevent coffee powder C from escaping during dispensing, the filter 100 can be advantageously raised towards the dispensing mouth 4a (Fig. 3).

By bringing the filter 100 closer to the drop zone of the coffee powder C, the dispersion of the coffee powder C during dispensing can be minimised by enabling the precise filling of the housing 103.

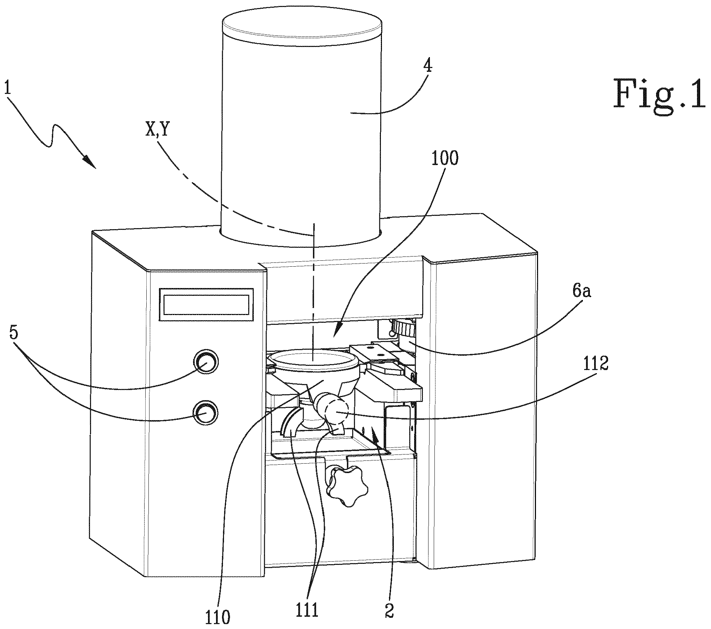

Subsequently, the support seat 2a (and thus the filter 100) is lowered, preferably to its initial position (Fig. 1), so that the pressing device 6 can be switched from the non-operating position to the operating position. Moreover, the method may preferably comprise a step of performing a lateral oscillation of the filter holder 110 during the vertical ascent of the filter holder 110 itself towards the dispensing mouth 4a, so as to increase the filling efficiency of the housing 103 and improve the spreading of the dose of coffee powder.

In fact, the method then comprises a step of controlling the first movement member 9 to move the pressing device 6 from the non-operating position to the operating position (Fig. 4) and a subsequent, or simultaneous, step of controlling the rotation member 7 to rotate the pressing portion 6a about the rotation axis R.

At this point, the pressing portion 6a is aligned along the alignment axis X to the filter 100 and it is possible to proceed with pressing the dose of coffee powder C.

The method therefore comprises a step for controlling the second movement member 10 to move the support seat 2a and the pressing device 6 towards each other along the alignment axis X (Fig. 4A) so that the pressing portion 6a is inserted by rotation inside the housing 103 of the filter 100 until the pressing surface 6b is arranged at the pressing distance h (Fig. 5 and 5A) from the perforated bottom surface 102 such that a controlled pressing of the dose of coffee powder C contained in the filter 100 is performed.

Advantageously, the pressing and rotation enable optimal compacting of the coffee dose in an effective and controlled manner.

The rotation advantageously enables the pressing of the dose of coffee powder C to be improved, by creating a smooth final surface of the dose that makes it possible to properly and efficiently prepare a coffee.

During the control step of the rotation member 7, the method preferably comprises a step for cleaning the peripheral edge 104 of the side wall 101 of the filter 100 performed by rotating the peripheral brush 8 around the rotation axis R, so that at the same time as the pressing step (Fig. 5) any coffee powder accumulated on the edge of the filter 100 is effectively cleaned.

Advantageously, cleaning the peripheral edge 104 each time it is used prevents coffee from being deposited, which leads to degradation of the coffee machine seal and subsequent loss of pressure, leading to a longer brewing time, and loss of quality in the final coffee.

Subsequently, the method then comprises a step for controlling the second movement member 10 to move the support seat 2a and the pressing device 6 away from each other along the alignment axis X such that the pressing portion 6a is removed from the housing 103.

The step of controlling the second movement member 10, to move the support seat 2a and the pressing device 6 towards each other, is preferably carried out by translating the support seat 2a towards the pressing device 6 along the alignment axis X so that it is the dose of coffee powder C that progressively contacts the pressing surface 6b that is simply rotated.

In addition, the step for controlling the second movement member 10 to move the support seat 2a (and therefore the pressed dose) and the pressing device 6 away from each other is carried out by translating the support seat 2a away from the pressing device along the alignment axis X. Thus, advantageously, it is not necessary to arrange a motor for moving the pressing device 6 along the alignment axis X. The pressing device 6 can only translate along the movement axis Z, increasing the stability of the pressing device 6 itself and reducing the number of motors required. Finally, the method comprises a step for controlling the first movement member 9 to move the pressing device 6 from the operating position to the non-operating position (Fig. 6) so as to free the space required to allow the operator to conveniently extract the filled and pressed filter 100 from the support seat 2a.

Advantageously, following the step for controlling the first movement member 9 to move the pressing device 6 from the operating position to the non-operating position, the method comprises a step for cleaning the pressing surface 6b, preferably carried out by rotating the pressing portion 6a about the rotation axis R while it is arranged in contact with the brush. The method may also comprise a step of adjusting operating parameters for operating the first movement member 9, the second movement member 10, and the rotation member 7, depending on distinctive parameters of the dispensed dose of coffee powder C.

In this way, it is possible to set the machine 1 up so that it can carry out the entire filling cycle autonomously, limiting the operations required of the operator, to obtain a coffee that is always of high quality.

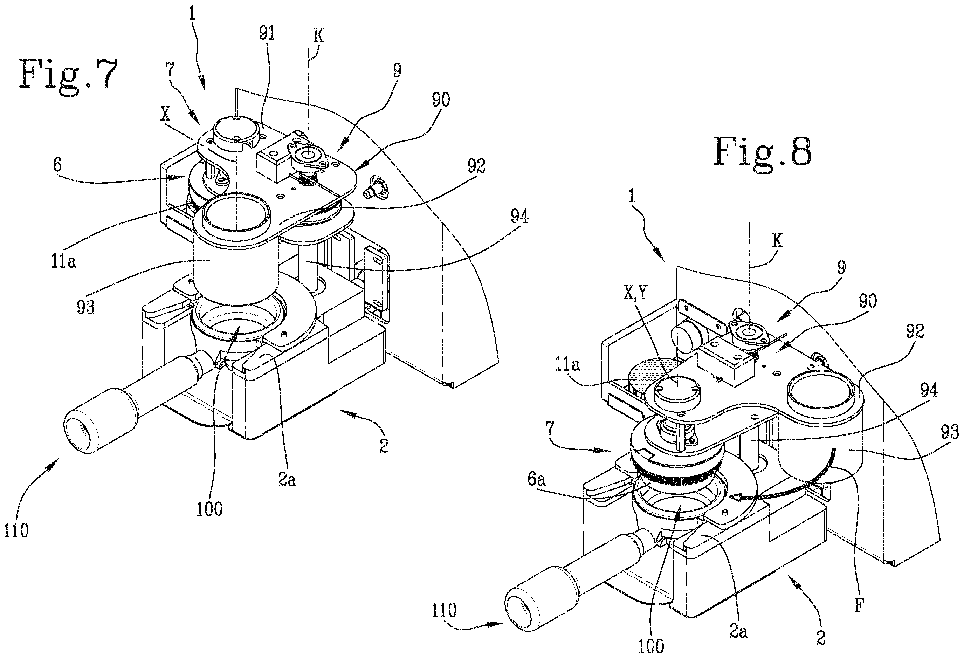

Figures 7 and 8 illustrate an alternative embodiment of the machine 1 that is the subject of this invention in accordance with an alternative embodiment of this invention, wherein the first movement member 9 is preferably a carousel 90 rotating about a respective rotation axis K parallel to the alignment axis X.

In particular, the carousel 90 comprises a first arm 91 to the free end of which the rotation member 7 is fixed.

In other words, the carousel 90 is configured to reversibly rotate the pressing device 6 between a non-operating position and an operating position, wherein the pressing device 6 is interposed between the dispensing mouth 4a and the support seat 2a so that the pressing portion 6a is aligned with the support seat 2a along the alignment axis X and the pressing surface 6b faces the support seat 2a and is perpendicular to the alignment axis X.

The carousel 90 preferably comprises a second arm 92 to the free end of which a channelling tube 93 for channelling the dose of coffee powder C is fixed.

Even more preferably, the arms 91, 92 lie within the same plane perpendicular to the rotation axis K and extend along respective prevailing extension directions (away from the rotation axis K) angularly arranged at 90°.

The carousel 90 is configured to rotate the arms 91, 92 so as to alternately arrange the pressing portion 6a in the operating position (Fig. 8), or the channelling tube 93 at, i.e. facing, the dispensing mouth 4a and the pressing portion 6a in the non-operating position (Fig. 7).

The second movement member 10 may preferably comprise a motor, not illustrated, which controls a recirculating ball screw 94 to move the support seat 2a and the dispensing mouth 4a towards and away from each other along the alignment axis X, i.e. it lifts and lowers the filter holder 110.

In accordance with this embodiment, in fact, the method that is the subject of this invention preferably provides that the steps for controlling the first movement member 9, i.e. of the rotating carousel 90, are performed by rotating the pressing device 6 around a respective rotation axis K parallel to the alignment axis X.

In addition, the step for dispensing the dose of coffee powder C preferably comprises a sub-step for channelling the dose of coffee powder C within a channelling tube 93 interposed between the dispensing mouth 4a and the housing 103.

In addition, and advantageously, when the pressing device 6 is rotated so that it is arranged in the non-operating position, the channelling tube 93 is simultaneously rotated about the rotation axis K to be arranged between the dispensing mouth 4a and the housing 103 along the alignment axis X. In other words, as illustrated with the arrow F in Figure 8, the carousel 90 may rotate about the rotation axis K, preferably according to an angle of 90°, to simultaneously move:
- the channelling tube 93 from a position of non-use (Fig. 8) to a position of use (Fig. 7), in which it is interposed between the dispensing mouth 4a, not visible in Figs. 7 and 8, and the filter 100 in order to effectively convey the dose of coffee powder C inside the housing 103, and
- the pressing device 6 from the operating position (Fig. 8) to the non-operating position (Fig. 7) arranged in the cleaning station 11, so that when the pressing portion 6a of the pressing device 6 is not being used, the pressing surface 6b can be automatically cleaned, thus optimising the time it takes.

Thus, this invention achieves the proposed purposes, overcoming the drawbacks complained of in the prior art, and providing an innovative machine 1 and method.

By using the machine 1 and the method that is the subject of the invention, the inexperience of the operator is no longer relevant and the effort required from him is reduced to the positioning of the filter 100 to be filled and the removal of the filled filter 100; the margin of error is minimised and the resulting coffee will always be of high quality.

In addition, the operator will be able to increase his productivity, as the machine 1 enables filling operations to be carried out quickly and efficiently, while also keeping the working area and working parts clean. Thanks to the cleaning members described, in fact, the machine and the method according to this invention guarantee an effective and immediate constant cleaning of the areas in contact with the coffee powder C, which is never carried out in coffee shops because it is very time consuming. Disadvantageously, correct dosing and pressing can be impeded if the pressing surface and the edges of the filter are not kept clean.

## Claims

1. A machine (1) for filling a filter with a dose of coffee powder comprising:
- a support base (2) comprising a support seat (2a) adapted to receive and support a filter (100) for containing a dose of coffee powder (C);
- a dispensing mouth (4a) for dispensing the dose of coffee powder (C) facing said support seat (2a) and aligned with said support seat (2a) along an alignment axis (X);
- a pressing device (6) comprising a pressing portion (6a) having a pressing surface (6b);
- a first movement member (9) configured to reversibly move the pressing device (6) between a non-operating position and an operating position, wherein the pressing device (6) is interposed between the dispensing mouth (4a) and the support seat (2a) such that the pressing portion (6a) is aligned with the support seat (2a) along the alignment axis (X) and the pressing surface (6b) faces the support seat (2a) and is perpendicular to the alignment axis (X);
- a rotation member (7) configured to rotate the pressing portion (6a) about a rotation axis (R) that is parallel to the alignment axis (X) and coincident, in use, with the alignment axis (X);
- a second movement member (10) configured to move the support seat (2a) and the dispensing mouth (4a) towards and away from each other along the alignment axis (X);
said pressing portion (6a) being configured to perform a controlled pressing of the dose of coffee powder (C) contained in the filter (100), during a machine (1) usage configuration wherein the filter (100) is arranged inside the support seat (2a), the pressing portion (6a) is arranged in the operating position, and the pressing portion (6a) and the support seat (2a) are moved towards each other;
**characterised in that** it further comprises a cleaning station (11) comprising a cleaning device (11a) configured to clean the pressing surface (6b) when the pressing device (6) is arranged in the non-operating position.

2. The machine (1) according to claim 1, comprising a control and adjustment unit configured to control activation of the first movement member (9), to control activation of the second movement member (10) and to control activation of the rotation member (7), and to adjust operating parameters for operating the first movement member (9), the second movement member (10) and the rotation member (7), depending on distinctive parameters of the dispensed dose of coffee powder (C).

3. The machine (1) according to claim 1 or 2, comprising a peripheral brush (8) arranged outside the pressing portion (6a), preferably attached to the pressing portion (6a)

4. The machine (1) according to one or more of the previous claims, wherein said first movement member (9) is a carousel (90) rotating around a corresponding rotation axis (K) parallel to the alignment axis (X), said carousel (90) comprising a first arm (91) to the free end of which said rotation member (7) is fixed.

5. Machine (1) according to claim 4, wherein said carousel (90) comprises a second arm (92) to the free end of which a channelling tube (93) for the coffee powder dose (C) is fixed, said carousel (90) being configured to rotate said arms (91, 92) so as to alternately arrange the pressing portion (6a) in the operating position, or the channelling tube (93) at the dispensing mouth (4a) and the pressing portion (6a) in the non-operating position.

6. A method for filling a filter (100) with a dose of coffee powder (C) comprising the steps of:
- arranging a machine (1) according to one or more of the preceding claims,
- arranging a filter (100) inside the support seat (2a), said filter (100) comprising a side wall (101) extending about an extension axis (Y) and a perforated bottom wall (102) defining a housing (103) adapted to contain a dose of coffee powder (C), such that the alignment axis (X) is coincident with the extension axis (Y).
- dispensing the dose of coffee powder (C) from said dispensing mouth (4a) inside the housing (103),
- controlling said first movement member (9) to move the pressing device (6) from the non-operating position to the operating position,
- controlling said rotation member (7) to rotate the pressing portion (6a) about the rotation axis (R),
- controlling said second movement member (10) to move the support seat (2a) and the pressing device (6) towards each other along the alignment axis (X) such that the pressing portion (6a) is inserted by rotation inside the housing of the filter (100) until the pressing surface (6b) is arranged at a pressing distance (h) from the perforated bottom surface (102) such that a controlled pressing of the dose of coffee powder (C) contained in the filter (100) is performed,
- controlling said second movement member (10) to move the support seat (2a) and the pressing device (6) away from each other along the alignment axis (X) such that the pressing portion (6b) is removed from the housing (103);
- controlling said first movement member (9) to move the pressing device (6) from the operating position to the non-operating position.
wherein following the step of controlling the first movement member (9) to move the pressing device (6) from the operating position to the non-operating position, the method comprises a step of activating the cleaning of the pressing surface (6b).

7. The method according to claim 6, comprising a step of adjusting operating parameters for operating the first movement member (9), the second movement member (10) and the rotation member (7), depending on distinctive parameters of the dispensed dose of coffee powder (C).

8. The method according to claim 6 or 7, comprising a step of controlling the second movement member (10) to move the support seat (2a) towards the dispensing mouth (4a) along the alignment axis (X) before the step of dispensing the dose of coffee powder (C), and a step of controlling the second movement member (10) to move the support seat (2a) away from the dispensing mouth (4a) along the alignment axis (X) at the end of the step of dispensing the dose of coffee powder (C).

9. The method according to one or more of claims 6-8, wherein said step of controlling the second movement member (10) to move the support seat (2a) and the pressing device (6) towards each other is performed by translating the support seat (2a) towards the pressing device (6) along the alignment axis (X), and wherein said step of controlling the second movement member (10) to move them away from each other is performed by translating the support seat (2a) away from the pressing device (6) along the alignment axis (X).

10. The method according to one or more of claims 6-9, comprising, during the step of controlling the rotation member (7), a step of cleaning a peripheral edge (104) of the side wall (101) of the filter (100) that is performed by rotating a peripheral brush (8) arranged outside the pressing portion (6a) about the rotation axis (R).

11. The method according to one or more of claims 6-10, wherein said step of cleaning the pressing surface (6b) is performed by rotating the pressing portion (6a) about the rotation axis (R) while it is arranged in contact with a brush.

12. The method according to one or more of claims 6-11, wherein the steps of controlling the first movement member (9) are performed by rotating the pressing device (6) about a respective rotation axis (K) parallel to the alignment axis (X).

13. The method according to one or more of claims 6-12, wherein said step of dispensing the dose of coffee powder (C) comprises a sub-step of channelling the dose of coffee powder (C) within a channelling tube (93) interposed between the dispensing mouth (4a) and the housing (103).

14. The method according to claim 12 and 13, wherein, when the pressing device (6) is rotated so that it is arranged in the non-operational position, the channelling tube (93) is simultaneously rotated about the rotation axis (K) to be arranged between the dispensing mouth (4a) and the housing (103) along the alignment axis (X).

## Patentansprüche

1. Maschine (1) zum Füllen eines Filters mit einer Dosis von Kaffeepulver, umfassend:
- einen Tragsockel (2), der einen Haltesitz (2a) umfasst, der geeignet ist, einen Filter (100) zum Enthalten einer Dosis Kaffeepulver (C) aufzunehmen und zu halten;
- eine Ausgabeöffnung (4a) zum Ausgeben der Dosis Kaffeepulver (C) gegenüber dem genannten Haltesitz (2a), die mit dem genannten Haltesitz (2a) entlang einer Ausrichtungsachse (X) ausgerichtet ist;
- eine Pressvorrichtung (6), die einen Pressteil (6a) mit einer Pressfläche (6b) umfasst;
- ein erstes Bewegungselement (9), das darauf ausgelegt ist, die Pressvorrichtung (6) zwischen einer Nicht-Betrieb-Position und einer Betriebsposition, in der die Pressvorrichtung (6) zwischen die Ausgabeöffnung (4a) und den Haltesitz (2a) gebracht wird, so dass der Pressteil (6a) mit dem Haltesitz (2a) entlang der Ausrichtungsachse (X) ausgerichtet wird und die Pressfläche (6b) dem Haltesitz (2a) gegenüberliegt und senkrecht zu der Ausrichtungsachse (X) ist, umkehrbar zu bewegen;
- ein Drehelement (7), das darauf ausgelegt ist, den Pressteil (6a) um eine zu der Ausrichtungsachse (X) parallele Drehachse (R) zu drehen, die bei Betrieb mit der Ausrichtungsachse (X) übereinstimmt;
- ein zweites Bewegungselement (10), das darauf ausgelegt ist, den Haltesitz (2a) und die Ausgabeöffnung (4a) entlang der Ausrichtungsachse (X) aufeinander zu- und voneinander wegzubewegen;
wobei der genannte Pressteil (6a) darauf ausgelegt ist, eine kontrollierte Pressung der in dem Filter (100) enthaltenen Dosis Kaffeepulver (C) während einer Betriebskonfiguration der Maschine (1) vorzunehmen, in der der Filter (100) im Inneren des Haltesitzes (2a) angeordnet ist, der Pressteil (6a) in der Betriebsposition angeordnet ist und der Pressteil (6a) und der Haltesitz (2a) aufeinander zubewegt werden;
**dadurch gekennzeichnet, dass** sie außerdem eine Reinigungsstation (11) umfasst, die eine Reinigungsvorrichtung (11a) umfasst, die darauf ausgelegt ist, die Pressfläche (6b) zu reinigen, wenn die Pressvorrichtung (6) in der Nicht-Betrieb-Position angeordnet ist.

2. Maschine (1) nach Anspruch 1, umfassend ein Steuer- und Einstellgerät, das darauf ausgelegt ist, die Aktivierung des ersten Bewegungselements (9) zu steuern, die Aktivierung des zweiten Bewegungselements (10) zu steuern und die Aktivierung des Drehelements (7) zu steuern und die Betriebsparameter zum Betätigen des ersten Bewegungselements (9), des zweiten Bewegungselements (10) und des Drehelements (7) abhängig von bestimmten Parametern der ausgegebenen Dosis Kaffeepulver (C) einzustellen.

3. Maschine (1) nach Anspruch 1 oder 2, umfassend eine äußere Bürste (8), die außerhalb des Pressteils (6a) angeordnet und vorzugsweise an dem Pressteil (6a) befestigt ist.

4. Maschine (1) nach einem oder mehreren der vorangegangenen Ansprüche, bei der das genannte erste Bewegungselement (9) ein um eine entsprechende, zu der Ausrichtungsachse (X) parallele Drehachse (K) drehendes Karussell (90) ist, wobei das genannte Karussell (90) einen ersten Arm (91) umfasst, an dessen freiem Ende das Drehelement (7) befestigt ist.

5. Maschine (1) nach Anspruch 4, bei der das genannte Karussell (90) einen zweiten Arm (92) umfasst, an dessen Ende eine Einfüllhülse (93) für die Dosis Kaffeepulver (C) befestigt ist, wobei das genannte Karussell (90) darauf ausgelegt ist, die genannten Arme (91, 92) zu drehen, um abwechselnd den Pressteil (6a) in der Betriebsposition oder die Einfüllhülse (93) an der Ausgabeöffnung (4a) und den Pressteil (6a) in der Nicht-Betrieb-Position anzuordnen.

6. Verfahren zum Füllen eines Filters (100) mit einer Dosis Kaffeepulver (C), umfassend die folgenden Schritte:
- Anordnen einer Maschine (1) nach einem oder mehreren der vorangegangenen Ansprüche,
- Anordnen eines Filters (100) im Inneren des Haltesitzes (2a), wobei der genannte Filter (100) eine um eine Verlaufsachse (Y) verlaufende Seitenwand (101) und eine perforierte Bodenwand (102) umfasst, die ein Gehäuse (103) definieren, das geeignet ist, eine Dosis Kaffeepulver (C) zu enthalten, so dass die Ausrichtungsachse (X) mit der Verlaufsachse (Y) ausgerichtet ist.
- Ausgabe der Dosis Kaffeepulver (C) aus der genannten Ausgabeöffnung (4a) im Inneren des Gehäuses (103),
- Steuern des genannten ersten Bewegungselements (9), um den Pressteil (6) aus der Nicht-Betrieb-Position in die Betriebsposition zu bewegen,
- Steuern des genannten Drehelements (7), um den Pressteil (6a) um die Drehachse (R) zu drehen,
- Steuern des genannten zweiten Bewegungselements (10), um den Haltesitz (2a) und den Pressteil (6) entlang der Ausrichtungsachse (X) aufeinander zuzubewegen, so dass der Pressteil (6a) durch Drehung in das Gehäuse des Filters (100) eingesetzt wird, bis die Pressfläche (6b) in einem Pressabstand (h) von der perforierten Bodenfläche (102) angeordnet ist, so dass ein kontrolliertes Pressen der in dem Filter (100) enthaltenen Dosis Kaffeepulver (C) durchgeführt wird,
- Steuern des genannten zweiten Bewegungselements (10), um den Haltesitz (2a) und die Pressvorrichtung (6) entlang der Ausrichtungsachse (X) voneinander wegzubewegen, so dass der Pressteil (6b) aus dem Gehäuse (103) entfernt wird;
- Steuern des genannten ersten Bewegungselements (9), um die Pressvorrichtung (6) aus der Betriebsposition in die Nicht-Betrieb-Position zu bewegen;
wobei das Verfahren im Anschluss an den Schritt des Steuerns des ersten Bewegungselements (9), um die Pressvorrichtung (6) von der Betriebsposition in die Nicht-Betrieb-Position zu bewegen, einen Schritt des Aktivierens der Reinigung der Pressfläche (6b) umfasst.

7. Verfahren nach Anspruch 6, umfassend einen Schritt des Einstellens der Betriebsparameter zum Betätigen des ersten Bewegungselements (9), des zweiten Bewegungselements (10) und des Drehelements (7), abhängig von bestimmten Parametern der ausgegebenen Dosis Kaffeepulver (C).

8. Verfahren nach Anspruch 6 oder 7, umfassend einen Schritt des Steuerns des zweiten Bewegungselements (10), um den Haltesitz (2a) entlang der Ausrichtungsachse (X) vor dem Schritt der Ausgabe der Dosis Kaffeepulver (C) zu der Ausgabeöffnung (4a) zu bewegen, und einen Schritt des Steuerns des zweiten Bewegungselements (10), um den Haltesitz (2a) entlang der Ausrichtungsachse (X) am Ende des Schritts des Ausgebens der Dosis Kaffeepulver (C) von der Ausgabeöffnung (4a) wegzubewegen.

9. Verfahren nach einem oder mehreren der Ansprüche 6 bis 8, bei dem der genannte Schritt des Steuerns des zweiten Bewegungselements (10), um den Haltesitz (2a) und die Pressvorrichtung (6) aufeinander zuzubewegen, durch Verschieben des Haltesitzes (2a) zu der Pressvorrichtung (6) entlang der Ausrichtungsachse (X) ausgeführt wird und bei dem der genannte Schritt des Steuerns des zweiten Bewegungselements (10), um sie voneinander wegzubewegen, durch Verschieben des Haltesitzes (2a) entlang der Ausrichtungsachse (X) von der Pressvorrichtung (6) weg ausgeführt wird.

10. Verfahren nach einem oder mehreren der Ansprüche 6 bis 9, umfassend, während des Schritts des Steuerns des Drehelements (7), einen Schritt des Reinigens eines Außenrands (104) der Seitenwand (101) des Filters (100), der durch Drehen einer außerhalb des Pressteils (6a) angeordneten äußeren Bürste (8) um die Drehachse (R) ausgeführt wird.

11. Verfahren nach einem oder mehreren der Ansprüche 6 bis 10, bei dem der genannte Schritt des Reinigens der Pressfläche (6b) durch Drehen des Pressteils (6a) um die Drehachse (R) ausgeführt wird, während er in Kontakt mit einer Bürste angeordnet ist.

12. Verfahren nach einem oder mehreren der Ansprüche 6 bis 11, bei dem die Schritte des Steuerns des ersten Bewegungselements (9) durch Drehen der Pressvorrichtung (6) um eine jeweilige Drehachse (K) parallel zu der Ausrichtungsachse (X) ausgeführt werden.

13. Verfahren nach einem oder mehreren der Ansprüche 6 bis 12, bei dem der genannte Schritt des Ausgebens der Dosis Kaffeepulver (C) einen Unterschritt des Einfüllens der Dosis Kaffeepulver (C) in eine zwischen der Ausgabeöffnung (4a) und dem Gehäuse (103) eingesetzte Einfüllhülse (93) umfasst.

14. Verfahren nach Anspruch 12 und 13, bei dem, wenn die Pressvorrichtung (6) so gedreht wird, dass sie in der Nicht-Betrieb-Position angeordnet ist, die Einfüllhülse (93) gleichzeitig um die Drehachse (K) gedreht wird, um entlang der Ausrichtungsachse (X) zwischen der Ausgabeöffnung (4a) und dem Gehäuse (103) angeordnet zu werden.

## Revendications

1. Une machine (1) pour remplir un filtre avec une dose de poudre de café comprenant :
- une base de support (2) comprenant un siège de support (2a) apte à recevoir et soutenir un filtre (100) pour contenir une dose de poudre de café (C) ;
- un goulot de distribution (4a) pour distribuer la dose de poudre de café (C) faisant face audit siège de support (2a) et aligné sur ledit siège de support (2a) le long d'un axe d'alignement (X) ;
- un dispositif de pression (6) comprenant une portion de pression (6a) présentant une surface de pression (6b) ;
- un premier membre de déplacement (9) configuré pour déplacer de façon réversible le dispositif de pression (6) entre une position non-opérationnelle et une position opérationnelle dans laquelle le dispositif de pression (6) est interposé entre le goulot de distribution (4a) et le siège de support (2a) de sorte que la portion de pression (6a) est alignée sur le siège de support (2a) le long de l'axe d'alignement (X) et la surface de pression (6b) fait face au siège de support (2a) et est perpendiculaire à l'axe d'alignement (X) ;
- un membre de rotation (7) configuré de façon à faire tourner la portion de pression (6a) autour d'un axe de rotation (R) qui est parallèle à l'axe d'alignement (X) et coïncidant, en service, avec l'axe d'alignement (X) ;
- un deuxième membre de déplacement (10) configuré pour déplacer le siège de support (2a) et le goulot de distribution (4a) de façon à ce qu'ils se rapprochent et s'éloignent l'un de l'autre le long de l'axe d'alignement (X) ;
ladite portion de pression (6a) étant configurée pour exercer une pression contrôlée de la dose de poudre de café (C) contenue dans le filtre (100) pendant une configuration de l'utilisation de la machine (1) dans lequel le filtre (100) est disposé à l'intérieur du siège de support (2a), la portion de pression (6a) et le siège de support (2a) sont déplacés l'un vers l'autre ;
**caractérisée en ce qu'**elle comprend également un poste de nettoyage (11) comprenant un dispositif de nettoyage (11a) configuré de sorte à nettoyer la surface de pression (6b) lorsque le dispositif de pression (6) est disposé en position non-opérationnelle.

2. La machine (1) selon la revendication 1, comprenant une unité de contrôle et d'ajustement configurée pour contrôler l'activation du premier membre de déplacement (9), pour contrôler l'activation du deuxième membre de déplacement (10) et pour contrôler l'activation du membre de rotation (7), et pour régler les paramètres opérationnels afin d'opérer le premier membre de déplacement (9), le deuxième membre de déplacement (10) et le membre de rotation (7), selon les paramètres distinctifs de la dose distribuée de poudre de café (C).

3. La machine (1) selon la revendication 1 ou 2, comprenant une brosse périphérique (8) disposée à l'extérieur de la portion de pression (6a), préférablement rattachée à la portion de pression (6a) .

4. La machine (1) selon une ou plusieurs de revendications précédentes dans laquelle le premier membre de déplacement (9) est un carrousel (90) tournant autour d'un axe de rotation correspondant (K) parallèle à l'axe d'alignement (X), ledit carrousel (90) comprenant un premier bras (91) à l'extrémité libre duquel le membre de rotation (7) est fixé.

5. La machine (1) selon la revendication 4 dans laquelle le carrousel (90) comprend un deuxième bras (92) à l'extrémité libre duquel un tube de canalisation (93) pour la dose de poudre de café (C) est fixé, ledit carrousel (90) étant configuré de façon à faire tourner lesdits bras (91, 92) de façon à disposer de façon alternée la portion de pression (6a) en position opérationnelle ou le tube de canalisation (93) au niveau du goulot de distribution (4a) et la portion de pression (6a) en position non-opérationnelle.

6. Une méthode pour remplir un filtre (100) avec une dose de poudre de café (C) comprenant les étapes suivantes :
- disposer une machine (1) selon une ou plusieurs des revendications précédentes ;
- disposer un filtre (100) à l'intérieur du siège de support (2a), ledit filtre (100) comprenant une paroi latérale (101) s'étendant autour d'un axe d'extension (Y) et une paroi de fond perforée (102) définissant un carter (103) apte à contenir une dose de poudre de café (C) de sorte que l'axe d'alignement (X) coïncide avec l'axe d'extension (Y) ;
- distribuer la dose de poudre de café (C) du dit goulot de distribution (4a) à l'intérieur du carter (103) ;
- contrôler ledit premier membre de déplacement (9) pour déplacer le dispositif de pression (6) de la position non-opérationnelle à la position opérationnelle ;
- contrôler ledit membre de rotation (7) pour faire tourner la portion de pression (6a) autour de l'axe de rotation (R) ;
- contrôler ledit deuxième membre de déplacement (10) pour déplacer le siège de support (2a) et le dispositif de pression (6) l'un vers l'autre le long de l'axe d'alignement (X) de sorte que la portion de pression (6a) est insérée par rotation à l'intérieur du carter du filtre (100) jusqu'à ce que la surface de pression (6b) soit disposée à une distance de pression (h) de la surface de fond perforée (102) de sorte qu'une pression contrôlée de la dose de poudre de café (C) contenue dans le filtre (100) est exercée ;
- contrôler ledit deuxième membre de déplacement (10) pour éloigner l'un de l'autre le siège de support (2a) et le dispositif de pression (6) le long de l'axe d'alignement (X) de sorte que la portion de pression (6b) soit retirée du carter (103) ;
- contrôler ledit premier membre de déplacement (9) pour déplacer le dispositif de pression (6) de la position opérationnelle à la position non-opérationnelle.
dans lequel suite à l'étape de contrôler le premier membre de déplacement (9) pour déplacer le dispositif de pression (6) de la position opérationnelle à la position non-opérationnelle, la méthode comprend une étape d'activation du nettoyage de la surface de pression (6b).

7. La méthode selon la revendication 6 comprenant une étape d'ajustement des paramètres opérationnels pour opérer le premier membre de déplacement (9), le deuxième membre de déplacement (10) et le membre de rotation (7), selon les paramètres distinctifs de la dose distribuée de poudre de café (C).

8. La méthode selon la revendication 6 ou 7, comprenant une étape de contrôle du deuxième membre de déplacement (10) pour déplacer le siège de support (2a) vers le goulot de distribution (4a) le long de l'axe d'alignement (X) avant l'étape de distribution de la dose de poudre de café (C), et une étape de contrôle du deuxième membre de déplacement (10) pour éloigner l'un de l'autre le siège de support (2a) du goulot de distribution (4a) le long de l'axe d'alignement (X) à la fin de l'étape de distribution de la dose de poudre de café (C).

9. La méthode selon une ou plusieurs des revendications 6 à 8 dans laquelle ladite étape de contrôle du deuxième membre de déplacement (10) pour déplacer le siège de support (2a) et le dispositif de pression (6) l'un vers l'autre est exécutée par translation du siège de support (2a) vers le dispositif de pression (6) le long de l'axe d'alignement (X), et dans laquelle ladite étape de contrôle du deuxième mouvement de d'éloignement réciproque (10) est exécutée par translation du siège de support (2a) dans la direction opposée du dispositif de pression (6) le long de l'axe d'alignement (X).

10. La méthode selon une ou plusieurs des revendications 6 à 9 comprenant, durant l'étape de contrôle du membre de rotation (7), une étape de nettoyage d'un bord périphérique (101) de la paroi latérale (101) du filtre (100) qui est exécutée par rotation d'une brosse périphérique (8) disposée hors de la portion de pression (6a) autour de l'axe de rotation (R).

11. La méthode selon une ou plusieurs des revendications 6 à 10 dans laquelle ladite étape de nettoyage de la surface de pression (6b) est exécutée en faisant tourner la portion de pression (6a) autour de l'axe de rotation (R) alors qu'elle est disposée en contact avec une brosse.

12. La méthode selon une ou plusieurs des revendications 6 à 11 dans laquelle les étapes de contrôle du premier membre de déplacement (9) sont exécutées en faisant tourner le dispositif de pression (6) autour d'un axe de rotation respectif (K) parallèle à l'axe d'alignement (X).

13. La méthode selon une ou plusieurs des revendications de 6 à 12 dans laquelle ladite étape de distribution de la dose de poudre de café (C) comprend une étape subsidiaire de canalisation de la dose de poudre de café (C) dans un tube de canalisation (93) interposé entre le goulot de distribution (4a) et le carter (103).

14. La méthode selon les revendications 12 et 13 dans laquelle, lorsque le dispositif de pression (6) est mis à tourner de sorte à être disposé en position non-opérationnelle, le tube de canalisation (93) se voit simultanément imprimer une rotation autour de l'axe de rotation (K) afin d'être disposé entre le goulot de distribution (4a) et le carter (103) le long de l'axe d'alignement (X).
